# EUROPEAN PATENT SPECIFICATION

(11) **EP 3 696 051 B1**
(45) Date of publication and mention of the grant of the patent: **14.09.2022**
(21) Application number: 20460002.7
(22) Date of filing: 16.01.2020
(51) Int. Cl.: B62B 7/12, B62B 9/10

(54) **GONDOLA FOR A PERAMBULATOR WITH AN ADJUSTMENT MECHANISM OF THE BACKREST**
GONDEL FÜR EINEN KINDERWAGENS MIT EINEM VERSTELLMECHANISMUS FÜR DIE RÜCKENLEHNE
GONDOLE POUR UNE POUSSETTE AVEC MÉCANISME DE RÉGLAGE DU DOSSIER

(30) Priority: 31.01.2019 PL 42876719
(43) Date of publication of application: 19.08.2020
(73) Proprietor: Przedsiebiorstwo Produkcyjno - Handlowe "ARO" KARON Spolka Jawna, 42-200 Czestochowa (PL)
(72) Inventor: Karon, Janusz, 42-200 Czestochowa (PL); Karon, Adam, 42-200 Czestochowa (PL)
(74) Representative: Korbela, Anna

(56) References cited:
- CN-A- 107 054 437
- DE-U1- 29 509 346
- US-A- 5 441 328

## Description

The object of the invention is a gondola for a perambulator with an_adjustment mechanism of the backrest of the perambulator destined for use in different types of gondolas of prams in which the headrest is movable i.e. the gondola is equipped with a tilting backrest.

Several solutions are known enabling the adjustment of perambulator gondola backrest.

The technically simplest and longest-used solution consists in a simple adjustment of the backrest of the gondola without slot in its bottom. Instead, in gondola's rear part - the one on which kid's head is rested, or in the rear part of the mattress, special element is fixed or provided for, in form - for instance - of insets or hooks. They make it possible to anchor and lock in a suitable position the element supporting the backrest resulting in lifting to a proper height of the entire elevated backrest of the gondola, or at least - of the mattress which lies on it. In this case, if there is a fabric stretched between the mattress and the bottom of the gondola, it is necessary to draw this fabric aside to pull up and change the angle of inclination of the backrest. If the repositioning of the tilting backrest of the gondola is effected with the baby inside, such repositioning is both difficult and uncomfortable for the baby (especially when the kid is asleep).

A solution called "Perambulator body" is known from the description of the Polish utility model Ru.59824 (applied for protection on 21.09.1998, published in BUP 06/99 and WUP 06/03). This gondola consists of a structure made from tubes, flat bars and a bottom to which a headrest is connected (allowing for swivel) by a coupling with the scroll bar of the adjuster. The coupling is coupled in a way allowing for its turning with the headrest, and in a way allowing for its sliding - with the scroll bar. The adjuster, usually fastened to the bottom, has in its base a large-pitch screw going through a scroll bar, threaded inside, with two pivotal ports.

In turn, from the description of the German utility model published as DE29509346U1 (with the priority date of 07.06.1994), a solution called "Carrycot and perambulator with reclinable backrest" *(Kinderwagen mit eine aufstellbare Rückenlehne aufweisendem Körbchen).* The perambulator is equipped with an adjustment device in the form of a handle, which is placed outside the carrycot, allows to change the level of the backrest between the first - substantially horizontal position and the second -tilted position. The handle in the extended position is turned in the direction corresponding to raising or lowering the backrest respectively, thereby causing the rotation of the corresponding spindle and consequently also the movement of the coupling member which continuously raises or lowers the backrest of the perambulator.

Moreover, from the Chinese description of the notification published as CN107054437A (with priority date of 29.04.2017), there is known a solution entitled "Easily-adjusted baby carriage". The baby carriage presented in the present solution is equipped with a threaded rod on which a nut is mounted, to which a strut is vertically attached. The latter, in turn, contacts the bottom surface of the second seat plate, allowing the control of its inclination to be adjusted. In order to facilitate the rotation of the threaded rod, a rotating handle is mounted in the outer part of the gondola.

On the other hand, from the description of the invention published as US5441328A (with the priority date of 10.02.19994) there is known a solution entitled "Adjustable seat back for a stroller". An adjustable seat back has side section that fold inward to provide lateral support for an infant or remain flat to provide a wider seat back for a toddler. A wing adjustment assembly sewn into a section of the seat liner includes a pivoting actuator.

The purpose of the invention was to develop a gondola for a perambulator with a mechanism, which, with the use of simple technical means and light and small components, would enable the easy, noiseless lifting of the tilting backrest of the gondola. The invention is defined in claim 1. Preferred embodiments are defined in the dependent claims.

The essence of the developed gondola for a perambulator with the adjustment mechanism of the backrest of the gondola of perambulator, which gondola consists of a shallow shell forming the bottom in which a tilting backrest is attached, and which gondola has sides (side walls), that are supported by two brackets, which brackets are curved in shape of the capital letter "U" for tensioning of side walls of gondola, and which gondola has the supporting element for locking the tilting backrest, fixed oscillatorily to the tilting backrest between the oscillatorily mounted tilting backrest and the bottom of the gondola, where the lower parts of the supporting element are locked with locks located under the tilting backrest (across to the longer sides of the gondola) and have recesses or convexities placed in the upper surface of the bottom of the gondola - resides in the fact that supporting element, has shape which resembles the capital letter "W", with turned down upper arms which are led out horizontally and placed in horizontal fixes profiled in the tilting backrest, and which supporting element is directly, rigidly fixed with the handle, which protrudes out of the central, lower part of the supporting element beyond the space of the gondola through an oblong slot in the gondola bottom.

Preferably, the handle is terminated in a ball knob.

Preferably, this opening the handle protrudes through, is surrounded by guide rails.

The advantage of the developed gondola for a perambulator with the adjustment mechanism of the backrest of the gondola of perambulator is that it allows the easy (no real force needed), noiseless lifting and lowering of the tilting backrest of the gondola as well as the safe steadying it in the preplanned position. It is possible to place the tilting backrest in different positions and moving it in both directions, from lying position to semi-sitting and the other way. It is the advantage of the developed gondola for the perambulator with the adjustment mechanism of the backrest of the gondola that it is possible to adjust the angle of inclination of the backrest of the bottom of the gondola from outside of the gondola.

The object of the invention, i.e. gondola for a perambulator with the adjustment mechanism of the backrest of the gondola of perambulator is shown as the specimen of execution on the drawings, on which:

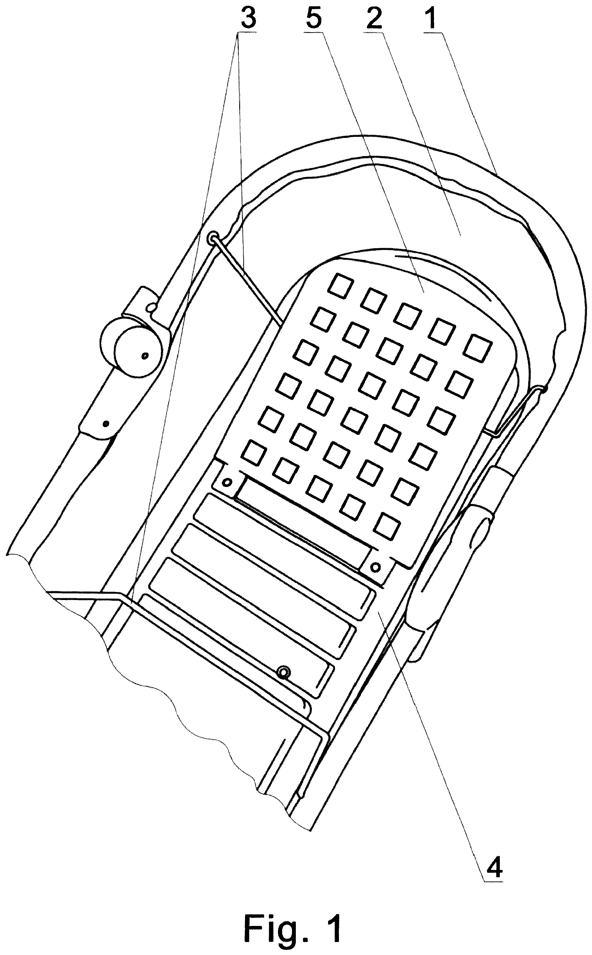

fig.1 - shows askew, downwards, a fragment of gondola with slightly raised tilting backrest; the U-shaped element for tensioning of soft gondola sides is visible,

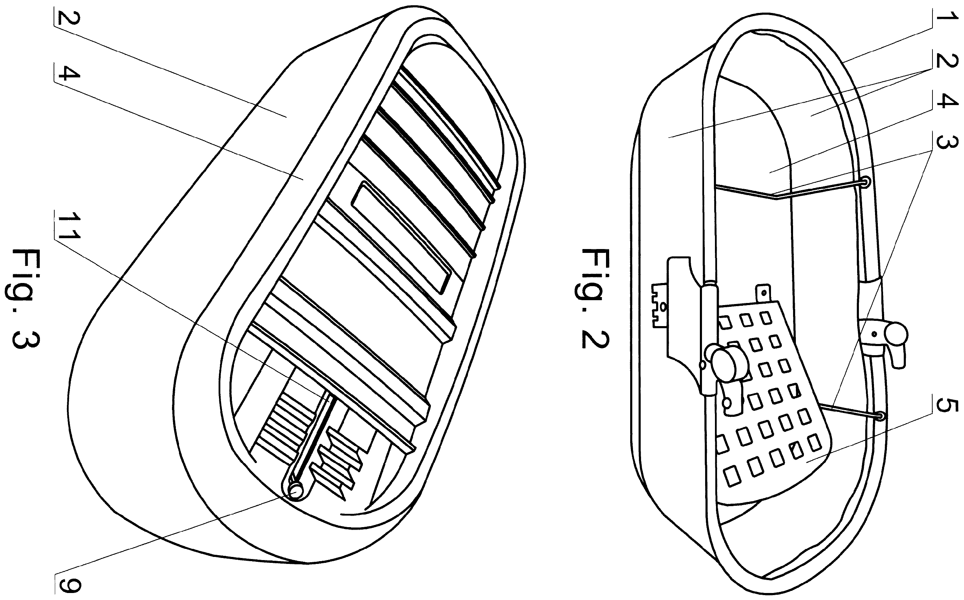

fig.2 - shows a perspective view downwards and slightly from the side, of entire gondola with the tilting backrest more raised,
fig.3 - shows a perspective view of the entire upturned gondola,
fig.4 - shows, in a perspective view downwards and slightly sideways, the bottom of the gondola (without side walls of the gondola) with the tilting backrest raised and locked,
fig.5 - shows a perspective view of the gondola bottom (without side walls of the gondola) from behind (i.e. from the side on which baby's head rests), with the tilting backrest slightly raised and prepared for locking,

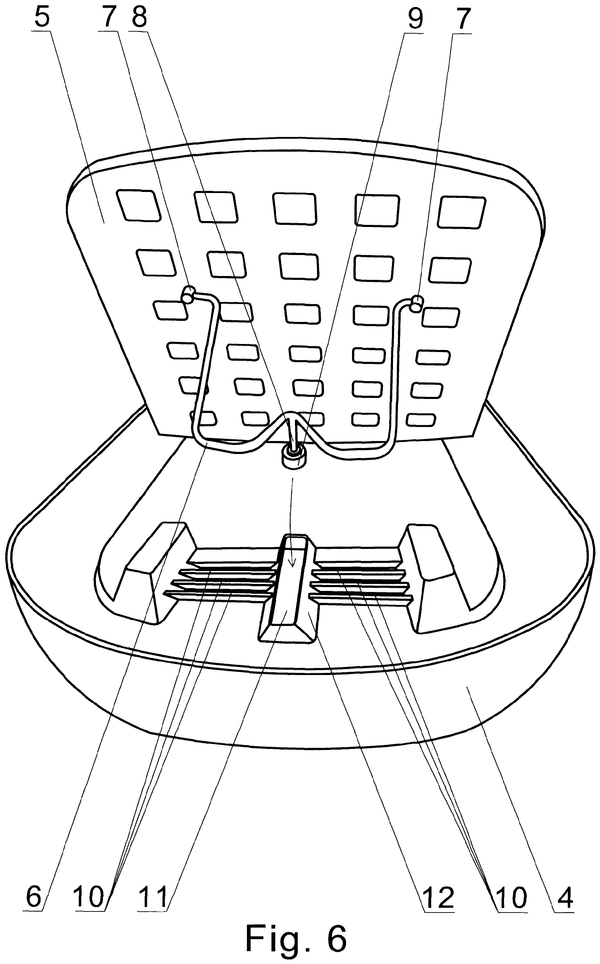

fig.6 - shows a perspective view from behind of the gondola bottom (without side walls of the gondola), with the tilting backrest raised and freely raising adjustment mechanism of the backrest of the gondola of perambulator,

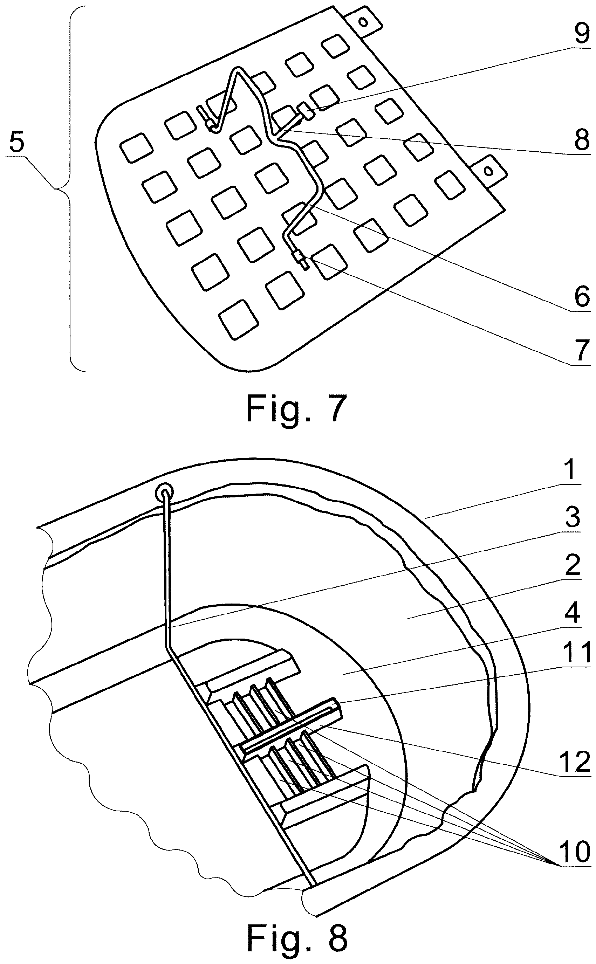

fig.7 - shows the tilting backrest unfastened from the gondola shown from the bottom, whereas
fig.8 - shows a fragment of the gondola from which the backrest was unfastened, askew downwards.

The developed gondola for the perambulator with the adjustment mechanism of the backrest of the gondola of perambulator is used in prams having the well-known structure in which the gondola 1 is a key component, which consists of a shallow shell as the bottom in which the tilting backrest is attached. It has sides 2 (side walls) supported by brackets 3 curved in a shape similar to "U", serving for tensioning the gondola sides 2 (side walls).

The bottom part of gondola is a shallow nutshell forming the bottom 4 surrounded by the sides 2 (side walls) of the gondola.

In the bottom 4 of the gondola 1 the tilting backrest 5 is fixed.

In such design, a part used for locking the tilting backrest 5 is placed between the tilting backrest 5 and the bottom 4 of the gondola 1. In case of the solution contemplated here this function is effected by a supporting element 6 which enables the firm placing of the tilting backrest 5 in different positions.

The supporting element 6 is curved in a "W" shape, with slightly flattened lower sockets and turned down upper arms which protrude horizontally and inserted in horizontal fixes 7 profiled in the tilting backrest 5. These fixes 7 may be additionally fastened to the tilting backrest 5. Thanks to this construction the pendulous movement of the supporting element 6 is possible, by 180° angle.

From the lower part of the supporting element 6 shaped as "W", usually from the middle curve of "W", a handle 8 protrudes directly and rigidly, usually ending with a ball knob 9 enabling the firm grasp of the handle.

The tilting backrest 5 is supported and locked by a supporting element 6, fixed below the backrest and oscillatorily connected with it.

The user (i.e. the person carrying the child in a pram) puts the supporting element 6 by handle 8 which is rigidly connected with the supporting element 6, in such a position in relation to the tilting backrest 5 that it is possible to lock the tilting backrest 5 at a desired angle.

Since the handle 8 protrudes beyond the gondola space the user has an easy access to the handle 8 and may freely push it from outside (slide it), and thus raise or lower the tilting backrest 5.

The above operation is all the more easy as the handle 8 is usually fitted with a ball knob 9.

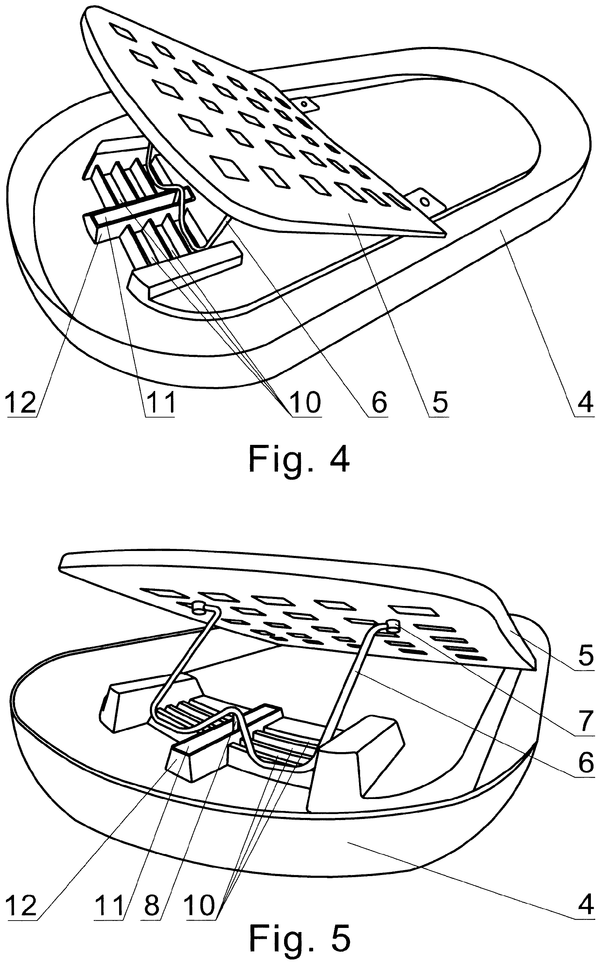

Having been raised and pushed to the selected height the tilting backrest 5 may be firmly and safely locked thanks to the lower parts of the supporting element 6 (which is "W" shaped) which, when delicately moved rearwards, lock in the locks 10 formed in the upper surface of the bottom 4 of the gondola 1 (fig 4 and 5).

The handle 8 protrudes outside the gondola 1 space by an oblong slot 11; the slot may be surrounded by guide rails 12 for easier sliding.

A stable and most level position of the tilting backrest 5 is achieved when the handle 8 is moved to the utmost in the direction of the outer edge of the bottom 4 of the gondola 1; whilst the most raised position is reached when the handle 8 is moved closest to the middle of the gondola 1. The slot 11 limits the movement of the handle.

### List of elements:

- 1: - gondola,
- 2: - sides or side walls of the gondola,
- 3: - bracket (curved in shape of "U", for tensioning of side walls of gondola),
- 4: - bottom (the lower part of the gondola),
- 5: - tilting backrest,
- 6: - supporting element ("W" shaped),
- 7: - fixes,
- 8: - handle,
- 9: - ball knob,
- 10: - locks,
- 11: - slot,
- 12: - guide rail.

## Claims

1. Gondola for a perambulator with an adjustment mechanism of a backrest of the gondola, which gondola (1) consists of a shallow shell forming a bottom (4) and a tilting backrest (5) is attached to the bottom, and which gondola (1) has side walls (2), that are supported by two brackets (3) being curved in the shape of the capital letter "U" and which gondola (1) has a supporting element (6), fixed oscillatorily to the tilting backrest (5) between the oscillatorily mounted tilting backrest (5) and the bottom (4) of the gondola (1), where the lower parts of the supporting element (6) are locked with locks (10), which locks (10) are located under the tilting backrest (5) and have recesses made in the upper surface of the bottorr (4) of the gondola (1), **characterized in that** the supporting element (6) has a shape which resembles the capital letter "W", with turned down upper arms, which are led out horizontally and placed in horizontal fixes (7) profiled in the tilting backrest (5), it and has a handle (8) which is directly, rigidly fixed with the supporting element (6), and which protrudes out of the central, lower part of the supporting element (6), beyond the space of the gondola (1) through an oblong slot (11) in the bottom (4) of the gondola (1).

2. Gondola of the perambulator, as per claim 1, **characterized in that** the handle (8) is terminated in a ball knob (9).

3. Gondola of the perambulator as per claim 1, **characterized in that** the slot (11) through which the handle (8) protrudes is surrounded by guide rails (12).

## Patentansprüche

1. Die Gondel für einen Kinderwagens mit einem Verstellmechanismus für die Rückenlehne der Gondel, die Gondel (1) besteht aus einer flachen, den Boden (4) bildenden Schale und eine klappbare Rückenlehne (5) am Boden befestigt ist und die Gondel (1) weist Seitenwände (2) auf, die durch zwei gebogene Elemente (3) gestützt sind, die der Form eines großen Buchstabens "U" ähneln, und die Gondel (1) besitzt zwischen der pendelartig befestigten, klappbaren Rückenlehne (5) und dem Boden (4) der Gondel (1) ein an der Rückenlehne (5) befestigtes, auch pendelartiges, Stützelement (6), dessen untere Teile durch Verriegelungen (10) blockiert werden, die sich unter der klappbaren Rückenlehne befinden (5) und Vertiefungen an der Oberseite des Bodens (4) der Gondel (1) aufweisen, **gekennzeichnet dadurch, dass** das Stützelement (6) eine Form hat, die dem großen Buchstaben "W" mit aufgedrehten Armen ähnelt, die horizontal herausgeführt und in waagerechte, in der anzuhebenden Rückenlehne (5) profilierte Verankerungen (7) hineingeschoben sind, und dass es direkt fest mit dem Griff (8) verbunden ist, der vom zentralen unteren Teil des Stützelements (6) außerhalb der Gondel (1) durch eine Längsöffnung (11) im Boden (4) der Gondel (1) hinausgeführt wird.

2. Gondel für einen Kinderwagens nach Anspruch 1 **dadurch gekennzeichnet, dass** der Griff (8) mit einem Knopf (9) endet.

3. Gondel für einen Kinderwagens ist nach dem Anspruch 1 **dadurch gekennzeichnet, dass** die Öffnung (11), durch die der Griff (8) geführt wird, von Führungen umgeben ist (12).

## Revendications

1. Une gondole pour une poussette avec mécanisme de réglage du dossier de la gondole, laquelle gondole (1) se compose d'une coque peu profonde formant un fond (4) et un dossier relevable (5) est attaché au fond de la gondole et laquelle gondole (1) possède des parois latérales (2) qui sont supportées par deux éléments (3) cintrés en forme de grande lettre « U », laquelle gondole (1) présente entre le dossier relevable (5) fixé de manière à pivoter et le fond (4) de la gondole (1), un élément de support (6) fixé au dossier relevable (5), également attaché de manière à pivoter, dont les parties inférieures viennent se caler par des crémaillères (10), lesquelles crémaillères (10) sont situées sous le dossier relevable (5) et ont des évidements réalisés dans la surface supérieure du fond (4) de la gondole (1), **caractérisée en ce que** l'élément de support (6) est cintré en forme de grande lettre « W », dont les deux parties symétriques en « V » évasé s'étendent horizontalement et sont insérés dans des charnières horizontales (7) moulées dans le dossier relevable (5), et lequel « W » est directement relié de manière rigide à une poignée (8) qui s'étend depuis la partie inférieure centrale de l'élément de support (6) hors de l'espace de la gondole (1) à travers une ouverture longitudinale (11) dans le fond (4) de la gondole (1).

2. Gondole pour une poussette selon la revendication 1, **caractérisée en ce que** l'extrémité de la poignée (8) est assortie d'un bouton (9).

3. Gondole pour une poussette selon la revendication 1, **caractérisée en ce que** l'ouverture (11) à travers laquelle la poignée (8) fait saillie est entourée d'une glissière (12).
